# EUROPÄISCHE PATENTSCHRIFT

(11) **EP 2 665 163 B1**
(45) Veröffentlichungstag und Bekanntmachung des Hinweises auf die Patenterteilung: **18.09.2019**
(21) Anmeldenummer: 13151117.2
(22) Anmeldetag: 14.01.2013
(51) Int. Cl.: H02K 15/095, H02K 15/12

(54) **Wickelschablone sowie Verfahren zum Herstellen eines Stators für einen Elektromotor**
Winding pattern and method for producing a stator for an electric motor
Gabarit d'enroulement et procédé de fabrication d'un stator pour un moteur électrique

(30) Priorität: 16.05.2012 DE 102012208217
(43) Veröffentlichungstag der Anmeldung: 20.11.2013
(73) Patentinhaber: Metabowerke GmbH, 72622 Nürtingen (DE)
(72) Erfinder: Bauer, Stefan, 72589 Westerheim (DE); Hiller, Matthias, 72657 Altenriet (DE)
(74) Vertreter: Markfort, Iris-Anne Lucie

(56) Entgegenhaltungen:
- EP-A1- 0 849 857
- EP-B1- 1 225 679
- DE-A1- 19 817 370

## Beschreibung

Die vorliegende Erfindung betrifft eine Wickelschablone sowie ein Verfahren zum Herstellen eines Stators für einen Elektromotor.

Derartige Statoren werden in elektrischen Antrieben bzw. Elektromotoren eingesetzt, die neben einem Stator auch einen Rotor umfassen. Eine übliche Anwendung solcher elektrischer Antriebe findet sich bei Haushaltsgeräten und Elektrowerkzeugmaschinen.

Ein Stator eines elektrischen Antriebs bzw. eines Elektromotors mit einem entsprechenden Rotor weist in der Regel einen Statorkörper mit einer geschlossenen Statorwand und daran angeordneten Polhörnern bzw. Polspitzen auf. Innerhalb dieser Polhörner ist der Rotor des elektrischen Antriebs angeordnet, welcher sich um eine Drehachse innerhalb des Stators relativ zu diesem rotatorisch bewegt. Der Statorkörper, welcher üblicherweise aus eisenhaltigen Werkstoff (Eisen) hergestellt ist, weist einen Spulenraum auf, der eine Anzahl von Spulennuten umfasst, die von den jeweiligen Polhörnern und der Statorwand des Stators begrenzt werden. In diese Spulennuten wird üblicherweise ein isolierter Spulendraht bzw. werden aus einem derartigen Draht gefertigte Feldspulen eingelegt.

Jede der eingelegten Drahtspulen weist zwei Wickelköpfe auf. Als Wickelkopf wird dabei derjenige Teil der Wicklungen der Spule bezeichnet, der von dem Statorkörper axial, d.h. in Längsrichtung des Statorkörpers, vorsteht und somit außerhalb der Spulennuten liegt.

Elektrische Antriebe mit einem Stator sowie einem darin angeordneten Rotor sind in der Regel luftgekühlt, wobei Umgebungsluft in den elektrischen Antrieb eingesaugt und durch diesen hindurch gezogen wird. Die durch den elektrischen Antrieb hindurchströmende Luft führt die Wärme von dem Spulendraht ab und stellt dabei sicher, dass der elektrische Antrieb ausreichend Leistung abgeben kann, ohne zu überhitzen.

Als Nachteil in Zusammenhang mit der Luftkühlung elektrischer Antriebe hat sich in der Praxis gezeigt, dass in der Kühlungsluft oftmals Staubpartikel enthalten sind, die an dem Spulendraht angreifen und dadurch zu einer Abrasion des Spulendrahts führen können.

Aus dem Stand der Technik ist es bekannt, Spulen vorzuwickeln und dann in die Spulennuten des Statorkörpers einzulegen. Dieses Verfahren ist jedoch kosten- und zeitintensiv. Weiterhin ist nachteilig, dass der Spulenraum bei handeingelegten Spulen niemals vollständig ausgenutzt werden kann, da stets ein geringer Spalt zwischen der Spulennut und der eingelegten vorgewickelten Spule verbleibt.

Alternativ wird der Spulenraum eines Statorkörpers direkt mit Spulendraht bewickelt, vorzugsweise mit Hilfe einer Nadelwickelmaschine oder dergleichen, da hierdurch eine höhere Packungsdichte des Spulendrahts in dem Spulenraum erreicht wird und weiterhin eine Schnellbewicklung erfolgen kann. Ein derartiges Verfahren ist beispielsweise aus der EP 1 225 679 B1 bekannt. Die Patentschrift beschreibt ein Verfahren zum automatisierten bewickeln von zweipoligen Statoren, wobei der Statorkörper sich auch zwei Statorhälften zusammensetzt, die separat bewickelt werden und im Nachgang hierzu miteinander verbunden werden.

Gemäß der EP 1 225 679 B1 werden die zu bewickelnden Statorhälften zum Wickeln von einer Wickelschablone umfasst, welche dazu dient, den an ihrer Oberfläche entlang geführten Draht in die Spulennuten der jeweiligen Statorhälfte einzulegen. Hierzu weist die Wickelschablone eine Wickelform mit einer Aufnahme für die jeweilige Statorhälfte auf sowie eine Drahtleithülse, die die aufgenommene Statorhälfte in der Aufnahme hält und die Polhörner der Statorhälfte umgreift. Die Wickelform gewährleistet einen stetigen Übergang zur Innenfläche der Statorwand, während die Draht-Leithülse einen stetigen Übergang mit den umgriffenen Polhörnern sicherstellt, so dass zwischen der Wickelform und der Draht-Leithülse ein vergrößerter Nuteinlauftrichter für den einzulegenden Spulendraht gebildet wird.

Mittels des vorstehend beschriebenen bekannten Verfahrens wird eine Spulenwicklung mit einer hohen Packungsdichte erzielt. Jedoch ist die Anzahl der Spulenwindungen der gewickelten Spule bei diesem Verfahren begrenzt. So ist es nicht möglich über die Spulennut hinaus zu wickeln und damit einen Füllgrad von mehr als 100% zu erreichen.

Die Anmelderin selbst hat in einer noch nicht veröffentlichten Patentanmeldung ein Verfahren beschrieben, bei dem der eingelegte Spulendraht über die Nut hinaus gewickelt werden kann. Bei gleichem beanspruchtem Bauraum kann so insgesamt mit der Spule ein höherer magnetischer Fluss erzeugt werden und damit eine höhere Leistung des Elektromotors erreicht werden. Ebenso kann für eine gegebene Anzahl von Windungen die Spule erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Hierzu werden die Windungen des eingelegten Spulendrahts zumindest in den Bereichen, in denen sie über die Spulennuten vorragen (d.h. auch im Bereich der Wickelköpfe), stoffschlüssig miteinander verbunden, insbesondere mit einem Backlack als Fixierungsmittel relativ zueinander fixiert.

Dadurch, dass zumindest teilweise eine stoffschlüssige Verbindung der Windungen der Spule untereinander mindestens in Teilen des außerhalb der Nut befindlichen Bereiches der Spule vorhanden ist, kann erreicht werden, dass die Spule auch ohne die stützende Wirkung der Polhörner mechanisch stabil bleibt.

Dabei kann der Spulendraht mindestens teilweise als Backlackdraht ausgebildet sein. Unter einem Backlackdraht wird ein Spulendraht verstanden, der eine temperaturfeste Grundisolation und eine durch Erhitzen verklebende, oft auch dabei polymerisierende Deckschicht aufweist.

Zum Herstellen der stoffschlüssigen Verbindung wird die Spule in den Bereichen, in denen eine Fixierung der Spulenwicklung gewünscht ist, erwärmt. In der Praxis hat sich jedoch gezeigt, dass die Erwärmung und Wärmeabfuhr nicht in allen Bereichen der Spule gleich ist, was zu unerwünschten Unregelmäßigkeiten der Spulenfixierung führen kann.

Eine Aufgabe der vorliegenden Erfindung besteht folglich darin, ein weiterentwickeltes Herstellungsverfahren vorzuschlagen, um in der Folge einen kompakten, robusten, leistungsfähigen Elektromotor bereit zu stellen.

Diese Aufgabe wird erfindungsgemäß durch eine Wickelschablone zum Herstellen eines Stators für einen elektrischen Antrieb mit den Merkmalen des Anspruchs 1 sowie durch ein Verfahren mit den Merkmalen des Anspruchs 8 gelöst.

Die erfindungsgemäße Wickelschablone umfasst eine Aufnahmeeinrichtung zur Aufnahme wenigstens eines Statorkörpers sowie einen Kern zur Fixierung des wenigstens einen in der Aufnahmeeinrichtung aufgenommenen Statorkörpers während des Einlegevorgangs des Spulendrahts. Dabei begrenzen die Aufnahmeeinrichtung und der Kern im Bereich der Wickelköpfe der Spule zwischen sich einen Zwischenraum zur formgebenden Ausbildung der Wickelköpfe während des Wickelvorgangs, so dass die Wickelköpfe im gewickelten Zustand zumindest bereichsweise die Wickelschablone kontaktierend an Grenzflächen des Zwischenraums zur Anlage kommen, wobei die Grenzflächen des Zwischenraums zumindest abschnittsweise im Querschnitt betrachtet derart polygonzugförmig ausgebildet sind, dass die effektiven Kontaktbereiche der gewickelten Wickelköpfe der Spule an der Wickelschablone gegenüber einer im Querschnitt betrachtet bogenförmigen Ausbildung der genannten Grenzflächen verringert sind.

Der zwischen der Aufnahmeeinrichtung und dem Kern gebildete Zwischenraum ist zumindest einseitig geöffnet und dient der formgebenden Ausbildung der Wickelköpfe während des Wickelvorgangs.

Die Grenzflächen des Zwischenraums werden durch die begrenzenden Außenflächen der Aufnahmeeinrichtung und des Kerns im Bereich der Wickelköpfe vorgegeben.

Im Sinne der vorliegenden Beschreibung der Erfindung bezeichnet der Querschnitt eine Schnittebene, die senkrecht zu der Längsachse des Stators ist, wobei mit der Längsachse die Mittellängsachse des Stators gemeint ist, die in der Regel mit der Rotationsachse eines zugehörigen Rotors zusammenfällt. Ein Polygonzug bezeichnet eine Linie oder Kante, die sich aus endlich vielen Geradstücken zusammensetzt. Anstelle von einem scharfen Knick zwischen den einzelnen Geradstücken können im Sinne der vorliegenden Erfindung auch klein dimensionierte Radien vorgesehen sein, um den daran zur Anlage kommenden Spulendraht im Bereich der Wickelköpfe nicht übermäßig zu beanspruchen.

Durch die spezielle Ausbildung der Grenzflächen gemäß der vorliegenden Erfindung werden die Kontakt- bzw. Anlageflächen der Wickelköpfe der Spule an der Wickelschablone gegenüber den aus dem Stand der Technik bekannten Wickelschablonen verkleinert. Demgemäß kann infolge der im Wesentlichen linienförmigen Kontakt- bzw. Anlageflächen, welche einen lokal begrenzten Kontakt ermöglichen, eine gleichmäßigere Abkühlung bzw. Erwärmung der Spule beim Aushärten des Backlacks erreicht werden.

Weiterhin kann vorgesehen sein, dass die Aufnahmeeinrichtung und/oder der Kern im Bereich der Wickelköpfe metallische Kontaktflächen zur Kontaktierung der Wickelköpfe aufweisen. Dabei können die Kontaktflächen beispielsweise aus Stahl hergestellt sein. Weiterhin kann vorgesehen sein, dass diese metallische Stifte umfassen, welche an den Oberflächen der Aufnahmeeinrichtung und/oder des Kerns im Bereich der Wickelköpfe angeordnet sind. Alternativ können die Oberflächen der Aufnahmeeinrichtung und/oder des Kerns im Bereich der Wickelköpfe vollflächig mit einer Metallbeschichtung versehen sein oder aus einem metallischen Werkstoff, beispielsweise Werkzeugstahl, hergestellt sein.

Die metallischen Kontaktflächen haben den Vorteil, dass sie eine gezielte Abführung der in die auszuhärtende Spule eingeleiteten Wärme bieten. Gleichzeitig wird in Kombination mit der polygonzugförmigen Gestaltung wenigstens einer der Grenzflächen die Wärmeabfuhr wiederum gezielt auf ein vorbestimmtes Maß eingestellt. So können Kontaktflächen zur Kontaktierung der Wickelköpfe in genau den Bereichen vorgesehen werden, in denen in den Wickelköpfen die höchsten Temperaturen und unerwünschten Unregelmäßigkeiten auftreten.

Werden gezielt metallische Kontaktflächen an einer oder mehreren Grenzflächen des Zwischenraums angebracht, beispielsweise in Form von metallischen Stiften oder dergleichen, welche die effektiven Kontaktflächen zur Kontaktierung der Wickelköpfe gegenüber den Grenzflächen verringern, kann grundsätzlich auf die polygonzugförmige Gestaltung der Grenzflächen verzichtet werden, wie gemäß Anspruch 3 angegeben.

Gemäß einer Weiterentwicklung der Erfindung kann die wenigstens eine der Grenzflächen im Querschnitt betrachtet eine begrenzte Anzahl von geraden Seitenkanten umfassen, die den Zwischenraum begrenzen, beispielsweise maximal fünf.

Ferner kann die Aufnahmeeinrichtung wenigstens zwei Spannkanten aufweist, an denen der Spulendraht während des Einlegevorgangs entlanggleiten kann. Vorzugsweise können vier Spannkanten vorgesehen sein, von denen jeweils zwei zueinander parallel ausgebildet sind. Die Spannkanten können weiterhin in der Weise ausgebildet sein, dass sie einen Übergang zu den Spulennuten eines zu bewickelnden Statorkörpers bereitstellen.

Die Spannkanten können insbesondere jeweils in Richtung zu dem in der Aufnahmeeinrichtung aufgenommenen Statorkörper hin ansteigend gestaltet sind. Dies bedeutet, dass die Spannkanten in einer Seitenansicht betrachtet stets in der Weise geneigt sind, dass ihr höchster Punkt (mit dem größten Abstand von einer Grundplatte der Aufnahmeeinrichtung) näher an dem in der Aufnahmeeinrichtung aufgenommenen Statorkörper liegt als ihr niedrigster Punkt.

Die Spannkanten können zudem jeweils an rampenförmigen Vorsprüngen ausgebildet sind, die von einer Grundplatte der Aufnahmeeinrichtung vorragen und in Richtung zu dem zu dem zu bewickelnden Statorkörper hin ansteigend gestaltet sind. Weiterhin kann vorgesehen sein, dass der Kern der Wickelschablone wenigstens zwei Niederhalter und/oder ein erstes und ein zweites Kernteil umfasst.

Durch die Ausbildung von wenigstens zwei Kernteilen, die nicht integral miteinander ausgebildet sind, ist es möglich, diese beispielsweise zur Fixierung von Isolierpapier zu nutzen, welches zur Isolierung der Spule in die Spulennuten eingelegt sein kann.

Bei einer bevorzugten Ausführungsform werden mit der erfindungsgemäßen Wickelschablone Statorsegmente des Statorkörpers, insbesondere Statorhälften, bewickelt, wobei der Statorkörper in Längsrichtung in mehrere Statorsegmente geteilt ist. Bei dieser Ausführungsform können mit den Niederhaltern die beiden Seitenwände der im Querschnitt betrachtet halbschalenförmigen Statorhälften übergriffen werden. Dadurch können die Niederhalter zusammen mit dem übrigen Kern einen vergrößerten Nuteinlauftrichter für den Spulendraht bereitstellen.

Ein vorteilhaftes Verfahren zum Herstellen eines oben beschriebenen Stators umfasst die folgenden Schritte:
- Einsetzen eines Statorsegments in die Aufnahmeeinrichtung einer erfindungsgemäßen Wickelschablone mit den vorstehend beschriebenen Merkmalen,
- Anlegen des Kerns an das Statorsegment zu dessen Fixierung,
- Einbringen des Spulendrahts in den Spulenraum,
- mindestens teilweise stoffschlüssiges Verbinden der Windungen der Spule untereinander mindestens in Teilen des außerhalb der Nut befindlichen Bereiches der Spule, und
- Entfernen der Wickelschablone.

Wenn beispielsweise das stoffschlüssige Verbinden unter Verwendung eines Backlackdrahtes als Spulendraht vorgenommen wird, kann dies beispielsweise dadurch bewerkstelligt werden, dass der Backlackdraht mit einem elektrischen Strom beaufschlagt und dadurch erhitzt wird.

Für eine provisorische Stabilisierung der Spule für die nachfolgenden Handhabungsschritte im Rahmen des Produktionsprozesses genügt es, wenn ein elektrischer Strom mit einer Stromstärke im Bereich von 30-70A, insbesondere von 50A, für einen Zeitraum von 3-5 Sekunden, insbesondere für 4 Sekunden, verwendet wird. Dadurch können die Taktzeiten in der Fertigung gering gehalten werden.

Insbesondere zur endgültigen stoffschlüssigen Verbindung der Windungen kann zusätzlich oder alternativ ein Träufelharz verwendet werden. Dabei kann der Statorkörper in das Träufelharz eingetaucht werden. Das Eintauchen oder anderweitige Versehen der Spule mit dem Träufelharz kann parallelisiert werden. So kann beispielsweise eine Vielzahl von Statorkörpern gleichzeitig in ein Träufelharzbad eingetaucht werden, so dass der Quotient aus Aushärtezeit des Träufelharzes und der Anzahl der gleichzeitig behandelten Statorköpfe die Taktzeit dieses Schrittes pro gefertigten Statorkopf bestimmt. Gegenüber dem Stand der Technik ergibt sich damit der Vorteil, dass der praktisch nicht parallelisierbare Schritt des Bestromens des Backlackdrahtes zeitlich kurz gehalten werden kann. Nachfolgend wird die Erfindung anhand der Zeichnung näher erläutert.

Die beigefügten Figuren zeigen beispielhaft eine bevorzugte Ausführungsform, bei der die einzelnen Merkmale der Erfindung miteinander kombiniert sind. Der Fachmann wird diese jedoch selbstverständlich auch losgelöst voneinander betrachten und/ oder zu anderen sinnvollen Kombinationen zusammenfassen können.

Es zeigen schematisch:
- Figur 1: eine isometrische Ansicht eines zweipoligen Stators, der mit einer erfindungsgemäßen Wickelschablone hergestellt wurde;
- Figur 2: einen Querschnitt senkrecht zu der Längsachse des Stators der Figur 1; und
- Figur 3: eine erfindungsgemäße Wickelschablone, welche bei einem Wickelvorgang eines Stators gemäß den Figuren 1 und 2 verwendet wird.

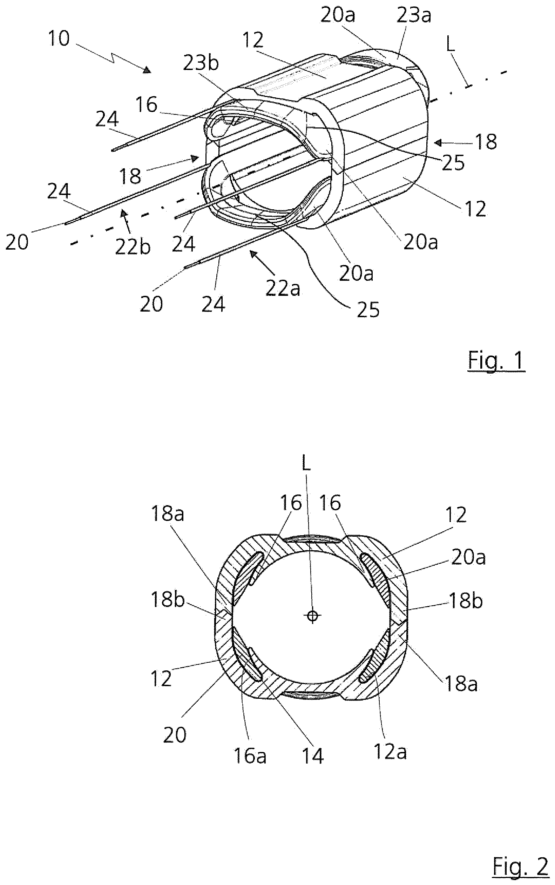

In der Figur 1 ist ein zweipoliger Stator eines elektrischen Antriebs gezeigt und allgemein mit dem Bezugszeichen 10 bezeichnet. Dieser zweipolige Stator umfasst einen Statorkörper, welcher im Bereich einer sich entlang einer Längsachse L des Stators erstreckenden Trennungsebene in zwei Statorsegmente bzw. Statorhälften 12 geteilt ist. Die beiden Statorhälften 12 können dabei als identische Teile ausgebildet sein, was die Herstellung des Statorkörpers besonders einfach macht. In üblicher Weise kann der dargestellte Statorkörper des Stators 10 durch Stanzpaketieren von identischen Blechlamellen zu einem Blechpaket hergestellt sein.

Weiterhin umfasst jede der Statorhälften 12 zwei Polhörner bzw. Polspitzen 16 (vgl. auch Fig. 2), die sich von der Innenumfangsfläche 12a der jeweiligen Statorhälfte 12 nach innen erstrecken und somit den Innenraum des Stators 10 für einen darin aufzunehmenden Rotor (nicht dargestellt) begrenzen.

Die beiden Statorhälften 12 sind im Bereich zweier Verbindungsstellen 18 miteinander verbunden, wobei jede Statorhälfte 12 eine erste Verbindungsstelle 18a sowie eine zweite Verbindungsstelle 18b aufweist.

Weiterhin sind in Figur 1 Endabschnitte bzw. Drahtenden 22a und 22b eines spulenförmig, d.h. in der Form einer Spule 20a mit einer Wicklungsstruktur und Wickelköpfen 23a und 23b, eingelegten Spulendrahts 20 zu erkennen. Wie aus Figur 1 ersichtlich, sind die Drahtenden 22a, 22b als Anschlussdrähte jeweils mit einem Schrumpfschlauch 24 als Schlauchelement versehen, welches nicht außerhalb des Stators 10 endet, sondern in den Stator 10 eingeschoben ist, d.h. in die Wicklungsstruktur der Spule 20a hineinragen kann, um eine optimale Isolierung zu erreichen und einen Schutz vor leitfähigen Ablagerungen zu erhalten. Als Schlauchelemente kommen auch Glasgewebeschläuche in Betracht. In anderen Ausführungsbeispielen könnte statt des Schlauchelements auch ein Hülsenelement vorgesehen sein.

Wie in Figur 2 deutlich zu erkennen ist, kann die erste Verbindungsstelle 18a der beiden Statorhälften 12 jeweils durch eine entlang der Längsachse L verlaufende dreieckförmige Nut 18a gebildet sein, während die zweite Verbindungsstelle 18b durch einen korrespondierenden entlang der Längsachse L verlaufenden dreieckförmigen Vorsprung 18b gebildet sein kann. Durch eine solche spezielle Ausbildung der ersten und zweiten Verbindungsstelle 18a und 18b kann eine einfache Herstellung der Verbindungsstellen 18 ermöglicht werden.

Weiterhin kann durch die Ausprägung der ersten und zweiten Verbindungsstellen 18a und 18b eine Ausrichtung der Statorhälften 12 zueinander erreicht werden, wenn die jeweils korrespondierende erste Verbindungsstelle 18a mit der zweiten Verbindungsstelle 18b in Anlage gebracht wird. Schließlich kann durch diese spezielle Ausgestaltung der Verbindungsstellen 18 gewährleistet werden, dass die Statorhälften 12 bei der Herstellung des Statorkörpers in direkter Anlage zueinander aus dem Material ausgestanzt werden können, was zu einem geringeren Anfallen von Verschnitt gegenüber dem Stand der Technik führt.

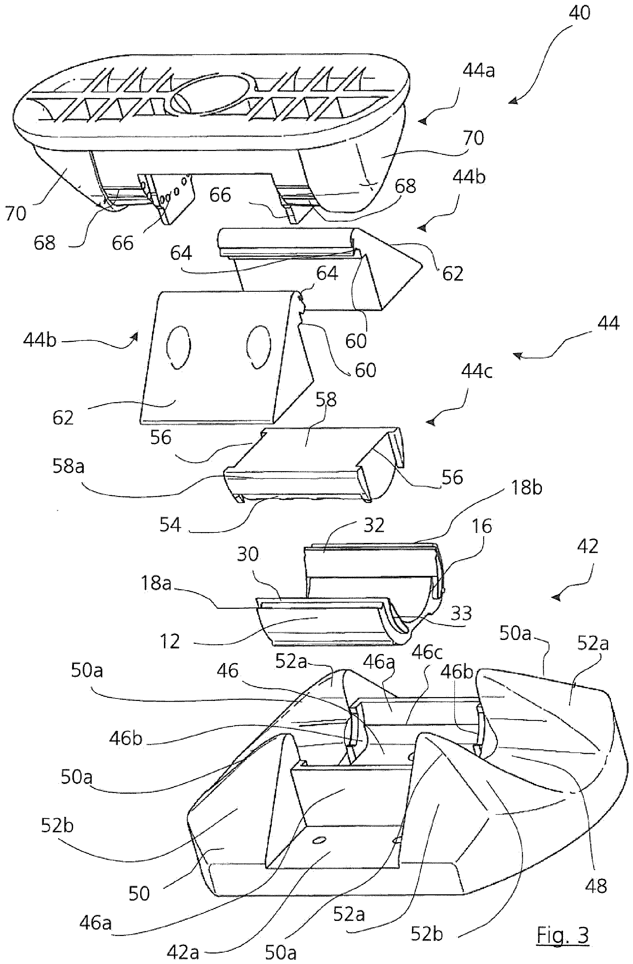

In Figur 2 ist ebenfalls deutlich gezeigt, dass die Statorinnenwand 12a und die radial äußere Wand 16a der Polhörner 16 eine Nut 14 begrenzen, in welche der aus Kupfer hergestellte Spulendraht 20 aufgenommen werden kann. Wie in den Figuren (vgl. insbesondere Figuren 2 und 3) zu erkennen ist, wird der Spulendraht 20 in der Form einer Spule 20a in den durch die Nuten 14 einer Statorhälfte 12 ausgebildeten Spulenraum eingelegt.

In Figur 2 ist weiterhin gezeigt, dass der eingelegte Spulendraht 20 nicht wie in der Praxis üblich mit einem Füllgrad von weniger als 100 % in die Nut 14 eingelegt ist, sondern über die Nut 14 hinaus gewickelt ist. Dadurch kann ein Füllgrad von mehr als 100 % und somit eine erhöhte Leistung eines Elektromotors mit einem derart gewickelten Stator 10 gegenüber einem Elektromotor mit einem konventionell gewickelten Stator erreicht werden. Insbesondere ermöglicht es die in Figur 2 gezeigte Wicklungsform, insgesamt mehr Spulenwindungen in einem hohlzylindrischen Volumenelement (welches sich zwischen den Statorhälften und der Außenseite eines Ankers befindet) anzuordnen als nach dem Stand der Technik möglich. Bei gleichem beanspruchtem Bauraum kann so insgesamt mit der Spule 20a ein höherer magnetischer Fluss erzeugt werden und damit eine höhere Leistung des Elektromotors erreicht werden. Ebenso kann für eine gegebene Anzahl von Windungen die Spule 20a erheblich flacher ausgelegt werden als bisher nach dem Stand der Technik möglich, so dass bei gleicher Windungszahl ein Anker höheren Durchmessers verwendet werden kann. Damit ergibt sich gegenüber dem Stand der Technik ein höheres Drehmoment auf die Ankerwicklungen, was im Ergebnis ebenfalls zu einer Leistungssteigerung führt. Ebenso kann bei gleichbleibender Leistung eine Verkleinerung des Elektromotors und damit eine Verringerung des Fadenmaßes eines zugehörigen Elektrohandwerkzeuges erreicht werden.

Da in dem über die Nut 14 hinausgehenden Bereich die mechanisch stabilisierende Wirkung der Polhörner 16 wegfällt, sind zusätzliche Maßnahmen erforderlich, um zu gewährleisten, dass die Spule ihre Form beibehält und sich die Wicklungen nicht voneinander lösen.

Gut in der Figur 1 erkennbar ist die definierte Ausbildung der Wickelköpfe 23a, 23b der Spule 20a, welche ebenfalls einen Bereich bilden, in dem der Spulendraht 20 außerhalb der Spulennuten 14 geführt ist. Dementsprechend sind auch in diesem Bereich zusätzliche Maßnahmen erforderlich, um zu gewährleisten, dass die Spule 20a ihre Form beibehält und sich die Wicklungen nicht voneinander lösen.

Hierzu ist eine zumindest teilweise stoffschlüssige Verbindung der Windungen der Spule 20a untereinander mindestens in Teilen des außerhalb der Nut 14 befindlichen Bereiches der Spule 20a vorteilhaft. Diese stoffschlüssige Verbindung kann beispielsweise unter Verwendung eines Backlackdrahtes verwirklicht werden. Unter einem Backlackdraht wird ein Spulendraht verstanden, der eine temperaturfeste Grundisolation und eine durch Erhitzen verklebende, oft auch dabei polymerisierende Deckschicht aufweist. Zusätzlich oder alternativ kann die stoffschlüssige Verbindung auch mittels eines Träufelharzes geschaffen werden, welches aufgrund der Kapillarwirkung der Zwischenräume zwischen den Windungen in der Spule 20a die Spule 20a nach einem Eintauchen praktisch vollständig durchdringt.

Wie in Figur 3 gezeigt ist, kann der zweipolige Stator 10 mit seinen beiden Statorhälften 12 nicht nur einen durch die Statorhälften 12 gebildeten Statorkörper umfassen, der mit Spulendraht 20 bewickelt ist, sondern auch Isolierpapier, das in die Nuten 14 eingelegt wird, ehe der Spulendraht 20 auf die jeweilige Statorhälfte 12 aufgewickelt wird.

Das Isolierpapier dient dazu, die durch den Spulendraht 20 gebildete Spule 20a im Betrieb eines den Stator 10 aufweisenden Elektromotors vor Abrasion zu schützen und elektrisch gegenüber dem Statorkörper sowie dem benachbarten Rotor (nicht gezeigt) zu isolieren. So ist gemäß der Norm DIN EN 60745 ein Mindestabstand von 2 mm Luftstrecke zwischen einem aktiven Teil, wie dem Statorkörper oder dem Rotor, und dem Spulendraht sicher zu stellen um eine elektrische Isolation zu gewährleisten. Diese wird bei dem vorstehend angesprochenen Füllgrad des Spulendrahts 20 über 100 % dadurch sichergestellt, dass das Isolierpapier mit einem radialen Überstand über die jeweiligen Polhörner 16 hinaus vorgesehen ist.

Als radialer Überstand wird der Teil des Isolierpapiers verstanden, der bezogen auf die Längsachse L radial, d.h. in einer Richtung senkrecht zu der Längsachse L, über die Polhörner 16 übersteht.

Dabei kann der Überstand des Isolierpapiers derart gewählt sein, dass zumindest die radial innenliegenden Abschnitte des überstehenden Isolierpapiers dann, wenn die Statorhälften zusammengesetzt sind, d. h. im Bereich ihrer Verbindungsstellen aneinander anliegen, die Überstände des Isolierpapiers der beiden Statorhälften ebenfalls aneinander anliegen bzw. sich überlappen. Zudem kann, wie in Figur 3 zu erkennen ist, auch ein (bezogen auf die Längsachse L des Stators 10) axialer Überstand 33 des Isolierpapiers sinnvoll sein, um den elektrischen Sicherheitsabstand von 2 mm Luftstrecke zwischen Spulendraht und aktivem Eisen zu gewährleisten. Als axialer Überstand 33 wird der Teil des Isolierpapiers verstanden, der bezogen auf die Längsachse L axial, d.h. in einer Richtung parallel zu der Längsachse L, über die Polhörner 16 übersteht. Weiterhin können die beiden Drahtenden bzw. Drahtendabschnitte 22a, 22b des Stators 10, welche beim Wickelvorgang von der Spule 20a an den Statorhälften 12 entstehen, als Anschlussdrähte bzw. elektrische Anschlüsse des Elektromotors genutzt werden können. Hierfür werden die Drahtenden 22a, 22b in ausreichend großer Länge aus der Spule 20a herausgeführt, um die Funktion von aus dem Stand der Technik bekannten separaten Litzen zu übernehmen und einen Anschluss der Spule 20a an eine Stromquelle oder einen Stromverteiler (nicht gezeigt) zu ermöglichen. An den freien Enden der Drahtendabschnitte 22a, 22b können separate Anschlusselemente, beispielsweise in der Form einer Crimpkralle (nicht dargestellt) in der Weise befestigt werden, dass diese die isolierende Außenschicht (im dargestellten Beispiel eine isolierende Grundschicht sowie eine darauf aufgebrachte Backlackschicht) des Spulendrahts 20 durchdringen und eine elektrische Kontaktierung der Spule ermöglichen. Die Anschlusselemente (nicht dargestellt) können zudem in ihrer Außengeometrie in der Art eines Steckers ausgebildet sein, der in einen korrespondierenden Steckverbinder an der Stromquelle bzw. dem Stromverteiler des elektrischen Antriebs eingesteckt werden kann.

In der Figur 3 ist eine erfindungsgemäße Wickelschablone 40 gezeigt, die im Wesentlichen eine Aufnahmeeinrichtung 42 sowie einen Kern 44 umfasst. Wie in der Figur 3 deutlich zu erkennen ist, weist der Kern 44 mehrere Bauteile auf, nämlich ein erstes Kernteil 44a, zwei Niederhalter 44b sowie ein zweites Kernteil 44c.

Die Aufnahmeeinrichtung 42 umfasst eine Grundplatte 42a, von der sich eine Aufnahme 46 sowie vier rampenartige Vorsprünge 50 erstrecken. Die Aufnahme 46, welche durch die Seitenwände 46a, 46b begrenzt ist, entspricht im Wesentlichen der Außenkontur der aufzunehmenden Statorhälfte 12. Die Seitenwände 46b weisen eine Ausnehmung zur Ausbildung der Wickelköpfe 23a, 23b auf. Ferner sind in der Ausnehmung seitliche Anlageflächen 46c vorgesehen, die sich an die Außenumfangsfläche einer aufgenommenen Statorhälfte 12 anlegen.

Die Vorsprünge 50 weisen Führungsflächen 52a, 52b auf die an einer Spannkante 50a aufeinanderstoßen. Die Spannkanten 50a können einen klein bemessenen Radius aufweisen, um den über die Spannkante 50a gleitenden Spulendraht und dessen Backlackbeschichtung nicht über Gebühr zu beanspruchen.

Während des Wickelvorgangs wird der Spulendraht 20 über die Führungsflächen 52a, 52b und die Spannkanten 50a geführt und über letztere vorgespannt, ehe er über den jeweiligen Vorsprung 50 rutscht und in die Spulennut 14 der aufgenommenen Statorhälfte 12 springt. Weitere Führungsflächen 70 im Bereich der auszubildenden Wickelköpfe der Spule sind an dem ersten Kernteil 44a ausgebildet, welche in eine Aufnahmekontur 48 der Aufnahmeeinrichtung 42 für die Wickelköpfe eingreifen, wenn der Kern 44 an eine aufgenommene Statorhälfte angelegt wird. Zudem weisen die beiden Niederhalter 44b Führungsflächen 62 auf, die entlang der Längsachse L der Statorhälfte 12 mit den Führungsflächen 52a, b fluchten, wenn der Kern 44 an eine aufgenommene Statorhälfte angelegt wird.

Wie vorstehend erwähnt, setzt sich der Kern 44 aus mehreren Teilen zusammen, deren Funktion und Wirkweise nachfolgend erläutert werden soll. Das erste Kernteil 44a weist eine zentrale Aufnahme für das zweite Kernteil 44c auf, die durch die Seitenwände 66 begrenzt wird. Das zweite Kernteil 44c weist zwei Führungsnuten 56 auf, in denen die Seitenwände 66 aufgenommen werden können, wenn das erste und das zweite Kernteil 44a und 44c miteinander verbunden werden sollen. Durch die Führungsnuten 56 wird eine definierte Positionsverlagerung der beiden Kernteile 44a und 44c relativ zueinander ermöglicht.

Eine solche ist wünschenswert, um zwischen dem ersten Kernteil 44a und dem zweiten Kernteil 44c den radial inneren Überstand des in die Spulennuten eingelegten und über diese radial vorstehenden Isolierpapier seitlich einzuklemmen und auf diese Weise zu verhindern, dass dieser während des Wickelvorgangs durch den Spulendraht verknickt werden kann. Hierzu wird zuerst das zweite Kernteil 44c in die Statorhälfte 12 eingesetzt. In einem weiteren Schritt wird das erste Kernteil 44a auf das zweite Kernteil 44c aufgeschoben, wobei mithilfe entsprechender Radien oder Phasen (nur an dem zweiten Kernteil 44c ist die Phase 58a gezeigt) an dem ersten Kernteil 44a und an dem zweiten Kernteil 44c der radial innere Überstand an die Klemmfläche 58 angelegt und zwischen den Kernteilen 44a und 44c eingeklemmt werden kann.

Weiterhin umfasst das erste Kernteil 44a begrenzende Außenflächen 68 im Bereich der auszubildenden Wickelköpfe, die Grenzflächen für einen Zwischenraum zwischen dem Kern 44 und der Aufnahmeeinrichtung 42 bilden. Diese Außenflächen 68 können im Querschnitt betrachtet nicht bogenförmig, sondern in der Art eines Polygonzugs ausgestaltet, wodurch mehrere parallele Kanten an der Anlagefläche 68 entstehen. In diesem Fall sind die begrenzenden Außenflächen der ersten Kernteils bevorzugt mit einem metallischen Werkstoff beschichtet oder aus einem solchen hergestellt. Alternativ sind, wie in der Figur 3 erkennbar, an den begrenzenden Außenflächen 68 der ersten Kernteils 44a metallische Kontaktflächen 68a ausgebildete, welche in der gezeigten Darstellung stiftartig geformt sind.

Beide Maßnahmen führen dazu, dass die effektiven Kontaktflächen des ersten Kernteils 44a (im Bereich der Wickelköpfe) an der Spule 20a verringert werden, wodurch eine gleichmäßigere Erwärmung und Wärmeabfuhr an den Wickelköpfen erreicht werden kann. So können die effektiven metallischen Kontaktflächen, die eine verbesserte Wärmeabfuhr gewährleisten, in genau den Bereichen angeordnet werden, in denen bei der Erwärmung der Spule Temperaturspitzen und damit unerwünschte Unregelmäßigkeiten auftreten können.

Der Effekt kann gegebenenfalls verstärkt werden, indem auch an der Aufnahmeeinrichtung 42 im Bereich ihrer Aufnahmekontur 48 für die Wickelköpfe entsprechende metallische Kontaktflächen oder eine Profilierung (mit einer im Querschnitt betrachtet polygonzugartigen Kontur) vorgesehen werden und/oder wird.

Die Niederhalter 44b dienen schließlich dazu, die Statorhälfte 12 im Bereich ihrer Verbindungsstellen 18a, 18b zu übergreifen und in ihrer Position in der Aufnahmeeinrichtung 42 seitlich zu fixieren. Hierfür weisen die Niederhalter 42b im Bereich ihrer Schultern 60 eine mit der Kontur der ersten Verbindungsstelle 18a bzw. mit der zweiten Verbindungsstelle 18b korrespondierende Kontur auf. Ferner können die Niederhalter 44 zusammen mit dem übrigen Kern einen Nuteinlauftrichter für den Spulendraht bereitstellen.

Schließlich sind auch an den Niederhaltern 44b nutförmige Ausnehmungen 64 zur Aufnahme des radialen äußeren Überstands des Isolierpapiers vorgesehen, die ebenfalls dazu dienen den radialen Überstand des Isolierpapiers von den Spulennut 14 fernzuhalten, um ein Verknicken des Isolierpapiers während des Wickelvorgangs durch den Spulendraht zu verhindern.

Nachfolgend wird der Herstellungsprozess eines zweipoligen Stators unter Bezugnahme auf die Figuren beschrieben:
Aus einem durch Stanzpaketieren von identischen Blechlamellen hergestellten Blechpaket werden die beiden Statorhälften 12 in Anlage zueinander ausgestanzt, die in einem weiteren Prozessschritt mit Kupferdraht bewickelt werden sollen.

Um im Betrieb eine ausreichende elektrische Isolation gewährleisten und ausreichend große Abstände zwischen der Spule und aktiven Teilen des Elektromotors bereitstellen zu können, wird, bevor die Statorhälften 12 bewickelt werden, Isolierpapier in die Nuten 14 der jeweiligen Statorhälften 12 eingelegt.

Um zu gewährleisten, dass das Isolierpapier relativ zu der jeweiligen Statorhälfte 12, in deren Nut 14 das Isolierpapier eingelegt wird, fixiert ist, können die Statorhälften 12 in einem vorgeschalteten Prozessschritt vor dem Einlegen des Isolierpapiers in die zugehörigen Nuten 14 zumindest in dem Bereich der Nuten erwärmt werden, beispielsweise auf eine Temperatur von wenigstens 150° Celsius. Das Isolierpapier ist auf derjenigen Seite, mit der es in Anlage an die erwärmte Nut 14 der Statorhälften 12 kommen soll, zumindest abschnittsweise mit einem Backlack beschichtet. Das eingelegte Isolierpapier kann dann, sobald es in die zugehörige Nut 14 eingelegt ist, für einige Sekunden an die Nutinnenseiten angepresst werden. Dabei schmilzt die Backlackbeschichtung an dem Isolierpapier an und verklebt dieses mit der Statorhälfte 12. Eine Fixierung des Isolierpapiers bei dem nachfolgenden Prozessschritt des Bewickelns ist folglich nicht mehr notwendig.

Das eingelegte Isolierpapier weist dabei, wie bereits vorstehend beschrieben, einen (inneren und äußeren - bezogen auf die Längsachse des Stators) radialen Überstand über die Polspitzen 16 der jeweiligen Statorhälften 12 hinaus auf.
Dieser Überstand kann, wie vorstehend ausgeführt, mithilfe des Kerns 44 durch entsprechende Mechanismen während des nachfolgenden Wickelvorgangs zusätzlich von der jeweiligen Spulennut 14 nach radial innen bzw. außen gezogen werden, um während des Bewickelns sicherzustellen, dass das Isolierpapier nicht durch den Spulendraht 20 geknickt wird.

In einem weiteren Schritt wird jede der Statorhälften 12 automatisiert mit Hilfe eines Wickelarms mit dem Spulendraht 20 bewickelt. Um eine Bewicklung der Statorhälften 12 zu erreichen, bei der der Füllgrad der Spulennut 14 über 100 % liegt, wird die in Fig. 3 dargestellte Wickelschablone 40 verwendet.

Bevor diese Schablone 40 wieder von der bewickelten Statorhälfte 12 gelöst wird, um den Statorkörper weiteren Fertigungsschritten zuzuführen, wird die Spule 20a mindestens teilweise verbacken bzw. "angebacken". Aus diesem Grund wird bei dem vorliegenden Herstellungsprozess ein Backlackdraht als Spulendraht 20 verwendet, d.h. ein Kupferdraht mit einer temperaturfesten Grundisolation und einer zusätzlichen Backlack-Deckschicht, welche bei Temperaturen von etwa 150°C bis 200°C erweicht und aushärtet, so dass die einzelnen Spulenwindungen der Spule 20a von dem ausgehärteten Backlack zumindest für die nachfolgenden Handhabungsschritte während der Fertigung in einem Verbund miteinander gehalten werden. Um den Backlack entsprechend zu erwärmen, wird Strom in die Spule 20a eingeleitet, so dass diese sich infolge ihres elektrischen Widerstands auf die gewünschte Temperatur (etwa 150°C bis 200°C) erhitzt. Für eine vorläufige Stabilisierung der Spule 20a genügt ein Stromfluss von ca. 50A für einen Zeitraum für ca. 4s, wodurch die Taktzeiten der Fertigung gering gehalten werden können.

In diesem Verfahrensschritt, in dem die einzelnen Drahtwindungen zu einer Spule 20a verbacken werden, kann auch der Überstand des Isolierpapiers an die Spule 20a angebacken werden. Dabei kann das Isolierpapier hierfür ebenfalls eine Backlackbeschichtung zumindest im Bereich seines Überstands auf der der Spule 20a zugewandten Seite aufweisen.

Alternativ ist es jedoch ebenfalls denkbar, das Isolierpapier direkt an der Backlackbeschichtung des Spulendrahtes oder mit Hilfe eines separat aufzubringenden Beschichtungsmittels an der Spule zu verbacken. Weiterhin ist auch denkbar, ein anderes Beschichtungsmittel bzw. eine andere Deckschicht als Backlack zur Fixierung der Spulenwindungen aneinander einzusetzen.

Darüber hinaus kann ein (nicht dargestelltes) Platzhalterelement in den Bereich des Spulenraums in der Weise eingelegt werden, dass sich beim automatisierten Einlegen des Spulendrahts 20 in den Spulenraum ein nicht dargestellter, durch das Platzhalterelement begrenzter, Hohlraum im Bereich der Endabschnitte 22a, 22b in der Wicklungsstruktur der Spule 20a ergibt. Nach dem Entfernen des Platzhalterelements aus der Wicklungsstruktur der Spule 20a kann der Schrumpfschlauch 24 auf das jeweilige Drahtende 22a, 22b aufgebracht und in den verbleibenden Hohlraum in der Wicklungsstruktur der Spule 20a eingeführt werden. Anschließend kann der Schrumpfschlauch 24 mittels eines Schlauchfixiermittels in der Wicklungsstruktur der Spule 20a fixiert werden. Das Schlauchfixiermittel kann Klebstoff oder Träufelharz, vorzugsweise ein dual härtendes Harz umfassen.

Schließlich können die Anschlusselemente an den freien Enden der Drahtendabschnitte 22a, 22b befestigt werden, wobei diese bevorzugt nicht nur an den Drahtendabschnitten 22a, 22b angreifen, sondern im befestigten Zustand auch den Schrumpfschlauch 24 durchdringen, um auf diese Weise eine optimale Isolation und Schutzwirkung zum Schutz der Drahtendabschnitte 22a, 22b bereitstellen zu können.

Nachdem die beiden Statorhälften 12 auf diese Weise hergestellt und bewickelt sind, werden diese miteinander verbunden, um gemeinsam den Statorkörper zu bilden. Hierzu werden die beiden Statorhälften 12 im Bereich ihrer Verbindungsstellen 18 aneinander angelegt, wobei jeweils eine erste Verbindungsstelle 18a einer Statorhälfte 12 in Anlage mit einer zweiten Verbindungsstelle 18b der jeweils anderen Statorhälfte 12 gebracht wird.

Die beiden aneinander anliegenden Statorhälften 12 können in einem weiteren Schritt mittels Tauchimprägnierung aneinander fixiert werden. Hierzu können die beiden aneinander anliegenden Statorhälften 12 bzw. die aufgewickelte Spule 20a erwärmt und in ein Tauchbad, insbesondere mit dual härtendem Harz (Träufelharz bzw. Dualharz) eingetaucht werden, welches sowohl unter Wärmeeinwirkung als auch unter UV-Licht aushärtet. Aufgrund der Kapillarwirkung der Zwischenräume zwischen den einzelnen Windungen der Spule 20a wird diese weitgehend von dem Träufelharz durchsetzt. Dadurch, dass die Spule 20a erwärmt wird, kann das Harz an der Spule 20a und insbesondere auch im Inneren der Spule 20a zwischen den Windungen bereits während des Tauchvorgangs aushärten, wodurch die gesamten Spule 20a mechanisch soweit stabilisiert werden kann, dass sie der mechanischen Beanspruchung im späteren Einsatz standhält. In den Außenbereichen des Stators 10, die nicht die gleiche Temperatur wie die Spule 20a haben, kann im Fall der Verwendung eines Dualharzes das Harz in einem weiteren Schritt mittels UV-Licht ausgehärtet werden.

Die Tauchimprägnierung dient nicht nur als zusätzlicher Schutz des gesamten Statorkörpers vor Abrasion, sondern auch als Statorfixiermittel zur stoffschlüssigen Verbindung der Statorhälften 12 miteinander. Grundsätzlich ist es jedoch auch denkbar, vor dem Schritt der Tauchimprägnierung die beiden Statorhälften beispielsweise durch Kleben, Schweißen oder Löten oder dergleichen stoffschlüssig miteinander zu verbinden. Dabei ist sowohl denkbar, nur einzelne Fixierungspunkte anzubringen, als auch eine Verbindungsnaht entlang der Verbindungsstellen 18 vorzusehen, um die Statorhälften während der Tauchimprägnierung in ihrer relativen Lage zueinander zu halten.

Das Statorfixiermittel, d.h. in dem beschriebenen Fall das Dualharz kann auch als Schlauchfixiermittel dienen.

Die vorstehend beschriebene Tauchimprägnierung ist äußerst vorteilhaft, da diese eine Beschichtung von Spule und Statorkörper sowie das Fixieren der Statorhälften aneinander in einem einzigen Prozessschritt ermöglicht. Weiterhin wird durch die verwendete Tauchimprägnierung sichergestellt, dass der Stator ein in sich sowohl elektrisch optimal isoliertes als auch gegen Abrasion geschütztes Gesamtsystem bildet. Das vorstehend beschriebene teilweise Verbacken bzw. Anbacken der Spulenwindungen kann durch die Kombination mit dem weiteren Prozessschritt des Tauchimprägnierens innerhalb eines Zeitfensters von etwa 3 Sekunden vorgenommen werden, da hierdurch die Windungen der Spule nur relativ zu einander in dem Maße gesichert werden müssen, dass die Wickelschablone entnommen werden kann. Die in einem weiteren Prozessschritt vorgenommene Tauchimprägnierung sichert die ausreichende Stabilität der Spule im Betrieb des elektrischen Antriebs. Wollte man die Spule nur durch Verbacken der Backlackbeschichtung des Spulendrahtes fixieren, wären höhere Backzeiten in der Wickelmaschine notwendig, was insgesamt die Taktzeit bei der Herstellung unvorteilhaft erhöhen würde.

## Patentansprüche

1. Wickelschablone (40) zum Herstellen eines Stators (10), wobei der Stator (10) umfasst:
- einen Statorkörper mit einem Spulenraum zur Aufnahme eines Spulendrahts (20), und
- den in den Spulenraum eingelegten Spulendraht (20), wobei der Spulendraht (20) in Form von wenigstens einer Spule (20a), die zwei Wickelköpfe (23a, 23b) umfasst, einlegbar ist,
wobei die Wickelschablone (40) eine Aufnahmeeinrichtung (42) zur Aufnahme wenigstens eines Statorkörpers aufweist sowie einen Kern (44) zur Fixierung des wenigstens einen in der Aufnahmeeinrichtung (42) aufgenommenen Statorkörpers während des Einlegevorgangs des Spulendrahts (20),
wobei die Aufnahmeeinrichtung (42) und der Kern (44) im Bereich der Wickelköpfe (23a, 23b) der Spule (20a) zwischen sich einen Zwischenraum zur formgebenden Ausbildung der Wickelköpfe (23a, 23b) während des Wickelvorgangs begrenzen, so dass die Wickelköpfe (23a, 23b) im gewickelten Zustand zumindest bereichsweise die Wickelschablone kontaktierend an Grenzflächen (48, 68) des Zwischenraums zur Anlage kommen, und wobei die Grenzflächen (48, 68) des Zwischenraums im Querschnitt betrachtet derart polygonzugförmig ausgebildet sind, dass die effektiven Kontaktbereiche der gewickelten Wickelköpfe (23a, 23b) der Spule (20a) an der Wickelschablone gegenüber einer im Querschnitt betrachtet bogenförmigen Ausbildung der genannten Grenzflächen verringert sind.

2. Wickelschablone (40) nach Anspruch 1,
wobei die Aufnahmeeinrichtung (42) und/oder der Kern (44) im Bereich der Wickelköpfe (23a, 23b) metallische Kontaktflächen (68a) zur Kontaktierung der Wickelköpfe (23a, 23b) aufweisen.

3. Wickelschablone (40) zum Herstellen eines Stators (10), wobei der Stator (10) umfasst:
- einen Statorkörper mit einem Spulenraum zur Aufnahme eines Spulendrahts (20), und
- den in den Spulenraum eingelegten Spulendraht (20), wobei der Spulendraht (20) in Form von wenigstens einer Spule (20a), die zwei Wickelköpfe (23a, 23b) umfasst, (20a) einlegbar ist
wobei die Wickelschablone (40) eine Aufnahmeeinrichtung (42) zur Aufnahme wenigstens eines Statorkörpers aufweist sowie einen Kern (44) zur Fixierung des wenigstens einen in der Aufnahmeeinrichtung (42) aufgenommenen Statorkörpers während des Einlegevorgangs des Spulendrahts (20), wobei der Kern (44) ein erstes Kernteil (44a) mit begrenzenden Außenflächen (68) im Bereich der auszubildenden Wickelköpfe (23a, 23b) und die Aufnahmeeinrichtung (42) eine Aufnahmekontur für die Wickelköpfe (23a, 23b) aufweisen, die Grenzflächen (48, 68) für einen Zwischenraum zur formgebenden Ausbildung der Wickelköpfe (23a, 23b) während des Wickelvorgangs zwischen dem Kern (44) und der Aufnahmeeinrichtung (42) bilden, so dass die Wickelköpfe (23a, 23b) im gewickelten Zustand zumindest bereichsweise die Wickelschablone kontaktierend an den genannten Grenzflächen (48, 68) des Zwischenraums zur Anlage kommen,wobei die Aufnahmeeinrichtung (42) und/oder der Kern (44) im Bereich der Wickelköpfe (23a, 23b) der Spule (20a) metallische Kontaktflächen (68a) aufweisen.

4. Wickelschablone (40) nach einem der Ansprüche 1 oder 2 wobei die wenigstens eine der Grenzflächen (48, 68) des Zwischenraums im Querschnitt betrachtet eine begrenzte Anzahl von geraden Seitenkanten umfasst, die den Zwischenraum begrenzen, beispielsweise maximal fünf.

5. Wickelschablone (40) nach einem der Ansprüche 1 bis 4, wobei die Aufnahmeeinrichtung (42) wenigstens zwei Spannkanten (50a) aufweist, an denen der Spulendraht (20) während des Einlegevorgangs entlanggleiten kann.

6. Wickelschablone (40) nach Anspruch 5,
wobei die Spannkanten (50a) jeweils an rampenförmigen Vorsprüngen (50) ausgebildet sind, die von einer Grundplatte (42a) der Aufnahmeeinrichtung (42) vorragen und in Richtung zu dem zu dem zu bewickelnden Statorkörper hin ansteigend gestaltet sind.

7. Wickelschablone (40) nach einem der Ansprüche 1 bis 6, wobei der Kern (44) der Wickelschablone (40) wenigstens zwei Niederhalter (44b) und/oder ein erstes und ein zweites Kernteil (44a, 44c) umfasst.

8. Verfahren zum Herstellen eines Stators (10) mit
- einem Statorkörper mit mindestens zwei Statorsegmenten (12),
- einem Spulenraum zur Aufnahme eines Spulendrahts (20) in Form einer Spule (20a), wobei der Spulenraum wenigstens eine Anzahl von Spulennuten (14) aufweist,
mit den folgenden Schritten:
- Einsetzen eines Statorsegments (12) in eine Aufnahmeeinrichtung (42) einer Wickelschablone (40) mit den Merkmalen der Ansprüche 1 bis 7,
- Anlegen des Kerns (44) an das Statorsegment (12) zu dessen Fixierung,
- Einbringen des Spulendrahts (20) in den Spulenraum,
- mindestens teilweise stoffschlüssiges Verbinden der Windungen der Spule (20a) untereinander mindestens in Teilen des außerhalb der Nut (14) befindlichen Bereiches der Spule (20a)
- Entfernen der Wickelschablone (40).

9. Verfahren nach Anspruch 8,
wobei das stoffschlüssige Verbinden unter Verwendung eines Backlackdrahtes als Spulendraht (20) vorgenommen wird.

10. Verfahren nach Anspruch 8 oder 9,
wobei das Verfahren ferner die Schritte umfasst:
- Einlegen von Isolierpapier in die Spulennuten (14) des Statorsegments (12),
- Fixieren des Isolierpapiers.

## Claims

1. Former (40) for producing a stator (10), wherein the stator (10) comprises:
- a stator body with a coil space for accommodating a coil wire (20), and
- the coil wire (20) which is inserted into the coil space, wherein the coil wire (20) can be inserted in the form of at least one coil (20a) which comprises two end windings (23a, 23b),
wherein the former (40) has a receiving device (42) for receiving at least one stator body and also has a core (44) for fixing the at least one stator body, which is received in the receiving device (42), during the insertion process of the coil wire (20),
wherein the receiving device (42) and the core (44), in the region of the end windings (23a, 23b) of the coil (20a), between them delimit an intermediate space for shaping the end windings (23a, 23b) during the winding process, so that the end windings (23a, 23b) come to rest on boundary surfaces (48, 68) of the intermediate space, such that they make contact with the former at least in regions, in the wound state, and wherein the boundary surfaces (48, 68) of the intermediate space, as viewed in cross section, are in the form of an open polygon in such a way that the effective contact regions of the wound end windings (23a, 23b) of the coil (20a) on the former are reduced in comparison to an arcuate design of the said boundary surfaces as viewed in cross section.

2. Former (40) according to Claim 1,
wherein the receiving device (42) and/or the core (44), in the region of the end windings (23a, 23b), have metal contact surfaces (68a) for making contact with the end windings (23a, 23b).

3. Former (40) for producing a stator (10), wherein the stator (10) comprises:
- a stator body with a coil space for accommodating a coil wire (20), and
- the coil wire (20) which is inserted into the coil space, wherein the coil wire (20) can be inserted in the form of at least one coil (20a) which comprises two end windings (23a, 23b),
wherein the former (40) has a receiving device (42) for receiving at least one stator body and also has a core (44) for fixing the at least one stator body, which is received in the receiving device (42), during the insertion process of the coil wire (20), wherein the core (44) has a first core part (44a) with delimiting outer surfaces (68) in the region of the end windings (23a, 23b) which are to be formed and the receiving device (42) has a receiving contour for the end windings (23a, 23b), which outer surfaces and receiving contour form boundary surfaces (48, 68) for an intermediate space for shaping the end windings (23a, 23b) during the winding process between the core (44) and the receiving device (42), so that the end windings (23a, 23b) come to rest on the said boundary surfaces (48, 68) of the intermediate space, such that they make contact with the former at least in regions, in the wound state, wherein the receiving device (42) and/or the core (44), in the region of the end windings (23a, 23b) of the coil (20a), have metal contact areas (68a).

4. Former (40) according to either of Claims 1 and 2,
wherein the at least one of the boundary surfaces (48, 68) of the intermediate space, as viewed in cross section, comprises a delimited number of, for example a maximum of five, straight side edges which delimit the intermediate space.

5. Former (40) according to one of Claims 1 to 4,
wherein the receiving device (42) has at least two clamping edges (50a) along which the coil wire (20) can slide during the insertion process.

6. Former (40) according to Claim 5,
wherein the clamping edges (50a) are each formed on ramp-like projections (50) which protrude from a base plate (42a) of the receiving device (42) and are designed to rise in the direction of the stator body which is to be wound.

7. Former (40) according to one of Claims 1 to 6,
wherein the core (44) of the former (40) comprises at least two holding-down means (44b) and/or a first and a second core part (44a, 44c).

8. Method for producing a stator (10) comprising
- a stator body with at least two stator segments (12),
- a coil space for accommodating a coil wire (20) in the form of a coil (20a), wherein the coil space has at least a number of coil slots (14),
comprising the following steps:
- inserting a stator segment (12) into a receiving device (42) of a former (40) having the features of claims 1 to 7,
- fitting the core (44) to the stator segment (12) in order to fix the said stator segment,
- introducing the coil wire (20) into the coil space,
- at least partially cohesively connecting the turns of the coil (20a) at least in parts of that region of the coil (20a) which is located outside the slot (14),
- removing the former (40).

9. Method according to Claim 8,
wherein the cohesive connection is performed using a baked-enamel wire as coil wire (20).

10. Method according to Claim 8 or 9,
wherein the method further comprises the steps of:
- inserting insulating paper into the coil slots (14) of the stator segment (12),
- fixing the insulating paper.

## Revendications

1. Gabarit d'enroulement (40) pour la fabrication d'un stator (10), dans lequel le stator (10) comprend :
- un corps de stator avec une chambre de bobine destinée à recevoir un fil à bobiner (20), et
- le fil à bobiner (20) introduit dans la chambre de bobine, le fil à bobiner (20) pouvant être introduit sous la forme d'au moins une bobine (20a) comprenant deux têtes de bobine (23a, 23b),
dans lequel le gabarit d'enroulement (40) comprend un dispositif de réception (42) destiné à recevoir au moins un corps de stator, ainsi qu'un noyau (44) pour l'immobilisation de l'au moins un corps de stator disposé dans le dispositif de réception (42) pendant l'opération d'introduction du fil à bobiner (20),
dans lequel le dispositif de réception (42) et le noyau (44) délimitent entre eux dans la zone des têtes de bobinage (23a, 23b) de la bobine (20a) un espace intermédiaire pour la formation des têtes de bobine (23a, 23b) pendant l'opération de bobinage, de sorte que les têtes de bobine (23a, 23b), dans leur état bobiné, viennent en appui au moins par endroits sur le gabarit d'enroulement avec établissement d'un contact sur des surfaces limites (48, 68) de l'espace intermédiaire, et les surfaces limites (48, 68) de l'espace intermédiaire, vues en section transversale, ont une forme de tracé polygonal de sorte que les zones de contact effectives des têtes de bobine (23a, 23b) bobinées de la bobine (20a) sur le gabarit d'enroulement sont réduites par rapport à une formation en courbes desdites surfaces limites, vues en section transversale.

2. Gabarit d'enroulement (40) selon la revendication 1,
dans lequel le dispositif de réception (42) et/ou le noyau (44) comportent dans la zone des têtes de bobine (23a, 23b) des surfaces de contact métalliques (68a) pour la mise en contact des têtes de bobine (23a, 23b).

3. Gabarit d'enroulement (40) pour la fabrication d'un stator (10), dans lequel le stator (10) comprend :
- un corps de stator avec une chambre de bobine destinée à recevoir un fil à bobiner (20), et
- le fil à bobiner (20) introduit dans la chambre de bobine, le fil à bobiner (20) pouvant être introduit sous la forme d'au moins une bobine (20a) comprenant deux têtes de bobine (23a, 23b)
dans lequel le gabarit d'enroulement (40) comprend un dispositif de réception (42) destiné à recevoir au moins un corps de stator, ainsi qu'un noyau (44) pour l'immobilisation de l'au moins un corps de stator disposé dans le dispositif de réception (42) pendant l'opération d'introduction du fil à bobiner (20), dans lequel le noyau (44) comprend une première partie de noyau (44a) avec des surfaces extérieures (68) faisant office de limitations dans la zone des têtes de bobine (23a, 23b) à former et le dispositif de réception (42) comprend un contour récepteur pour les têtes de bobine (23a, 23b), formant des surfaces limites (48, 68) pour un espace intermédiaire pour la formation des têtes de bobine (23a, 23b) pendant l'opération de bobinage entre le noyau (44) et le dispositif de réception (42), de sorte que les têtes de bobine (23a, 23b), dans leur état bobiné, viennent en appui au moins par endroits sur le gabarit d'enroulement avec établissement d'un contact sur lesdites surfaces limites (48, 68) de l'espace intermédiaire, dans lequel le dispositif de réception (42) et/ou le noyau (44) présentent des surfaces de contact métalliques (68a) dans la zone des têtes de bobine (23a, 23b) de la bobine (20a).

4. Gabarit d'enroulement (40) selon l'une des revendications 1 ou 2,
dans lequel l'au moins une des surfaces limites (48, 68) de l'espace intermédiaire, vue en section transversale, comprend un nombre limité de facettes droites délimitant l'espace intermédiaire, par exemple au maximum cinq.

5. Gabarit d'enroulement (40) selon l'une des revendications 1 à 4,
dans lequel le dispositif de réception (42) comprend au moins deux arêtes de tension (50a) sur lesquelles le fil de bobine (20) peut glisser pendant l'opération d'introduction.

6. Gabarit d'enroulement (40) selon la revendication 5,
dans lequel les arêtes de tension (50a) sont formées respectivement sur des saillies (50) en forme de rampes saillant d'une plaque de base (42a) du dispositif de réception (42) et aménagées de sorte à monter en direction du corps de stator à bobiner.

7. Gabarit d'enroulement (40) selon l'une des revendications 1 à 6,
dans lequel le noyau (44) du gabarit d'enroulement (40) comprend au moins deux éléments de maintien (44b) et/ou une première et une seconde partie de noyau (44a, 44c).

8. Procédé de fabrication d'un stator (10) avec
- un corps de stator avec au moins deux segments de stator (12),
- une chambre de bobine destinée à recevoir un fil à bobiner (20) sous la forme d'une bobine (20a), la chambre de bobine comportant au moins un certain nombre d'encoches de bobine (14)
avec les étapes suivantes :
- mise en place d'un segment de stator (12) dans un dispositif de réception (42) d'un gabarit d'enroulement (40) avec les caractéristiques des revendications 1 à 7,
- application du noyau (44) contre le segment de stator (12) pour immobiliser ce dernier,
- introduction du fil de bobine (20) dans la chambre de bobine,
- liaison au moins partielle des spires de la bobine (20a) entre elles par coopération de matière au moins dans des parties de la zone de la bobine (20a) situées à l'extérieur de l'encoche (14)
- enlèvement du gabarit d'enroulement (40).

9. Procédé selon la revendication 8,
dans lequel la liaison par coopération de matière est réalisée en utilisant un fil thermo-adhérent comme fil de bobine (20).

10. Procédé selon la revendication 8 ou 9,
dans lequel le procédé comprend en outre les étapes de :
- mise en place de papier isolant dans les encoches de bobine (14) du segment de stator (12),
- fixation du papier isolant.
